# EUROPEAN PATENT SPECIFICATION

(11) **EP 0 869 834 B1**
(45) Date of publication and mention of the grant of the patent: **16.01.2002**
(21) Application number: 95924815.4
(22) Date of filing: 23.06.1995
(51) Int. Cl.: B01D 17/02, C02F 1/68, E02B 15/04

(54) **CONTAMINANT RECOVERY SYSTEM AND METHOD**
SYSTEM UND VERFAHREN ZUR VERUNREINIGUNGENRÜCKGEWINNUNG
SYSTEME ET PROCEDE DE RECUPERATION DE CONTAMINANTS

(30) Priority: 24.06.1994 US 265153
(43) Date of publication of application: 14.10.1998
(73) Proprietor: G-TEC Inc., Fredericton, New Brunswick E3B 6C2 (CA)
(72) Inventor: Sutherland, George, New Brunswick E3B 6G8 (CA)
(74) Representative: Pfenning, Meinig & Partner
(86) International application number: CA9500377
(87) International publication number: WO9600119

(56) References cited:
- DE-A- 4 222 438
- FR-A- 2 146 311
- US-A- 3 667 608

## Description

### FTELD OF THE INVENTION

The present invention relates to an arrangement according to the pre-characterizing part of claim 1 as well as to a method according to the pre-characterizing part of claims 18, 19 and 21, respectively.

### BACKGROUND OF THE INVENTION

With the seemingly regular occurrence of oil tankers running aground an dumping their contents into the world's waterways, there has been a significant amount of activity in the oil spill clean-up art. Various methods have been set forth in an attempt to contain the oil once the same is spilled in order to prevent damage to aquatic life and other aspects of the environment. Chemical additives, porous materials, as well as various sheets and barriers have been proposed in the prior art, typical of the latter being U.S. Patent No. 5,120,598, issued to Robeson et al. June 9, 1992. The Robeson et al. disclosure provides a mat product composed of polyvinyl alcohol ultra-fine fibers. The same are formed into a mat and the mat is brought into contact with the oil spill. The result is that the fibers absorb the oil.

The Robeson et al. arrangement, although a meritorious and useful product, still requires removal from an oil slick once the fiber mat is saturated. In addition, presumably the oil must be removed from the mat before the same can be used in a similar manner. Clearly this is a cumbersome procedure and costly from a time point of view.

United States Patent No. 5,073,261, dated December 17, 1991, and issued to Conradi et al., provides a collapsible container having an inlet and an outlet and being composed of a water impervious rubber material. The collapsible container is connected to an inlet for discharging an oil-water mixture into the container. The container is configured with baffles, etc., to specifically contain the oil therein, the oil container subsequently being towed to a further location for removal of the oil. This arrangement does not result in the immediate removal of the oil from the water body containing the oil spill, but rather separates the oil from the water body containing the same while the container, having the oil therein, is still in the water. There is therefore, a possibility that residues may remain on the water surface even though a substantial amount of the oil is contained within the container floating in the water.

Other generally related art includes U.S. Patent No. 4,305,819.

In view of what the prior art has proposed as possible solutions for cleaning up oil spills, there clearly exists a need for a more advanced system which is capable of removing and recovering substantial amounts of oil or other contaminants from a water body, which system is optionally buoyant and/or self-contained and which does not require squeezing, pressing or otherwise expressing recovered oil and/or contaminant from a floating absorbing material.

### SUMMARY OF THE INVENTION

It is the object of the present invention to provide an improved arrangement for oil recovery and a method of employing same.

According to the invention, this object is solved with an arrangement comprising the features of claim 1. With respect to the method, this object is solved by the features defined in claims 18, 19 and 21, respectively. Preferred embodiments of the arrangement and method, respectively, according to the invention are defined in the corresponding subclaims.

According to the present invention there is provided an arrangement of fibers for recovering an immiscible contaminant from a liquid containing the contaminant to be recovered, comprisinq: a plurality of hollow hydrophobic fibers having pores therein for passage of said contaminant into the lumen of said hollow hydrophobic fibers; said fibers having ends connected at one end to suction means for passing said contaminant through said pores and into and through said hollow hydrophobic fibers.

The hollow fibers may be arranged in an array, a diverging pattern, a parallel pattern, intersecting pattern, bundled into one or more bundles, incorporated into a mat structure or incorporated into a suitable substrate, e.g. a cloth substrate or a polymeric membrane. Many further arrangements will be readily apparent to those skilled in the art. With respect to the fibers, the same are preferably microporous with the average pore diameter of the pores comprising, for example, 0.03 microns (µm) to about 5 microns (µm). The pore diameter will, of course, vary depending on the intended use for the fibers.

Suitable material for the hollow fibers can include, for example, polyolefins such as polyethylene, polypropylene, polybutene, polyisobutylene, polypentene, poly(4-methyl- isopentene) and their halogen-substituted derivatives having at least one fluorine atom: polycarbonate: polyphenylene oxide: polystyrene and a halogenated polystyrene having at least one fluorine atom: copolymers of ethylenically unsaturated hydro- carbons and/or halogen-substituted ethylenically unsaturated hydrocarbons having at least one fluorine atom, said ethyleni- cally unsaturated hydrocarbons and their halogen-substituted derivatives including ethylene, propylene, butene, isobutylene, pentene, hexene, monofluoroethylene, vinylidene fluoride, trifluoroethylene, tetrafluoroethylene, trifluorochloroethylene, hexafluoropropylene and the like: and blend polymers such as a combination of polyethylene with polypropylene, polyvinylidene fluoride, polytetrafluoroethylene or polystyrene; a combination of polypropylene with polyvinylidene fluoride or polytetrafluoro- ethylene; a combination of polyvinylidene fluoride with poly- sulfone, polyacrylonitrile, polyphenylene oxide or polytetrafluoroethylene; and the like. Preferred examples of materials employable include, as a main component, polyethylene, a halogenated polyethylene having at least one fluorine atom, polypropylene, a halogenated polypropylene having at least one fluorine atom, polycarbonate or polyphenylene oxide; or copolymers of two or three kinds of monomers selected from ethylene, propylene and tetrafluoroethylene. It is noted that where a plurality of components having different critical surface tensions are combined, the more the proportion of the component having a lower critical surface tension, the lower the critical surface tension of the entire polymer becomes.

The storage means and suction means may be conveniently positioned on a floating platform with the arrangement of fibers suitably connected to the suction means. The suction means may comprise a suitable pump sufficient to induce a sufficient suction in the hollow fibers in order to draw oil therethrough for deposit into the storage means.

Where it is desirable to have a self-contained unit which additionally is self-propelled, the storage means may contain a water discharge outlet which further may include a forcibly exhausted water stream. The forcibly exhausted water stream may be used to propel the floating recovery system through, for example, an oil slick.

In addition to the foregoing, the apparatus may additionally conveniently include a receiver such that the apparatus can be remotely controlled. In this respect, the apparatus may include a radio receiver or other suitable electromagnetic means for detecting a signal from a remote location. Further still, the apparatus may be manually moved by any suitable means and further may include connection fixtures to permit the possibility of towing the arrangement.

The possibility for remote control is a convenient feature since it permits a user access to an oil, chemical or other contaminant spill area even where there is hazardous condition in the area, e.g. surface fires, toxic fumes, etc.

It will be appreciated by those skilled in the art that although there is discussion of the use of the arrangement for recovering oil, many immiscible substances either mixed with or floating on a water body may be recovered using the inventive concept in arrangement of the present invention.

As indicated herein, the apparatus has been contemplated for numerous possible uses. In addition to the self-contained arrangements or floatation arrangements using partially land-based equipment, the present invention may be employed in a towing arrangement where the hollow fibers are towed behind a large floating vessel, e.g. a barge or other floating carrier vessel. This has the distinct advantage of removing a supernatant residue as it is discharged from the vessel. In this manner, the arrangement effectively "self-cleans" the surface of the water as the vessel travels therethrough.

Other arrangements clearly envisioned as being within the scope of the present invention include the use of the fibers in a suitable configuration, e.g. a mat, or other configuration for the purpose of lining a contaminated pond, such as a mine tailings pond. Further still, the arrangement may be totally submersed in a contaminated water body to assist in cleaning, for example, a contaminated river sediment bed, lake bed, etc.

The fibers, when in a mat arrangement or bundle arrangement may be positioned in an area to be treated in a stacked arrangement comprising bundles of the fibers, mat arrangements, woven or non-woven mat arrangements or employing substrates for the purpose of supporting the fibers or any combination of the above arrangements.

Use of the fibers and the contemplated arrangements therein clearly can be employed in combination with contaminant booms or in combination with any other contaminant clean-up system.

Having thus generally described the invention, reference will now be made to the accompanying drawings illustrating preferred embodiments.

### BRIEF DESCRIPTION OF THE DRAWINGS

Figure 1 is a top plan view of a mat according to one embodiment of the present invention;
Figure 2 is a cross-sectional view of the mat illustrated in Figure 1;
Figure 3 is an enlarged view of a fiber incorporated in the present invention;
Figure 4 is an alternate embodiment of the present invention;
Figure 5 is a further embodiments of the present invention;
Figure 6 is a still further embodiment of the present invention;
Figure 7 is a further embodiment of the present invention illustrating the mat as positioned within a separating vessel;
Figure 8 is yet another embodiment of the present invention;
Figure 9 is still a further alternate embodiment of the present invention; and
Figure 10 is a schematic illustration of the invention as employed with a containment boom.

Similar numerals denote similar components throughout the Figures.

### DETAILED DESCRIPTION OF THE PREFERRED EMBODIMENTS

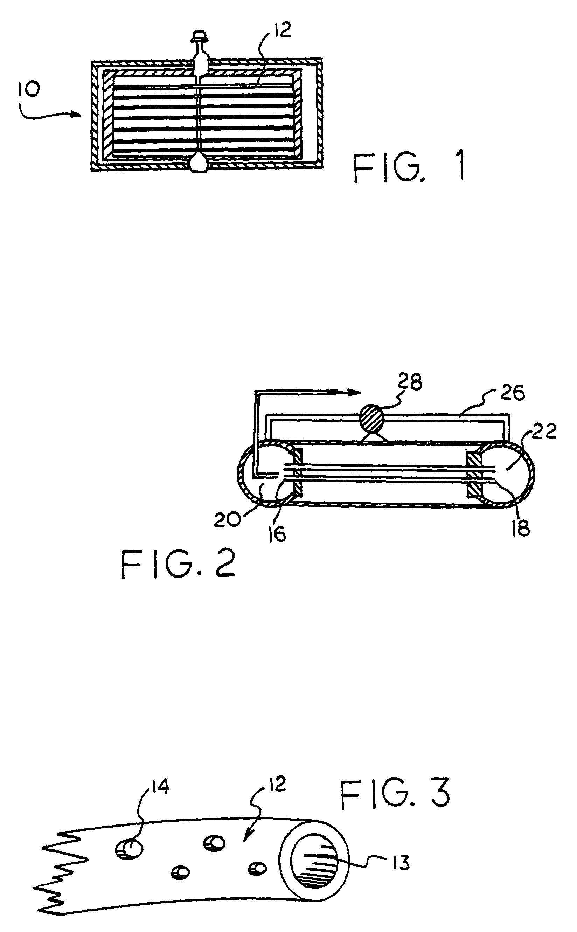

Referring initially to Figures 1, 2 and 3, shown is the apparatus according to a first embodiment of the present invention.

The mat, generally denoted by numeral 10 in Figure 1, comprises a plurality of individual hollow fibers 12, each fiber 12 having a hollow interior or lumen 13. The fibers 12 further include a plurality of micropores 14 extending from the outside of the fiber to the interior of the fiber 12 such that the micropores are in communication with the lumen 13. Generally speaking, the pore sizes of the micropores 14 will vary depending upon the material of which the fiber is made, the intended use for the fiber in terms of the contaminant to which it will be exposed among a host of other factors. As an example, the pores sizes can range from 0.03 microns (µm) to about 5 microns (µm) is a generally useful range. Broadly, the micropores will be large enough to permit acceptable flux, but small enough to exclude water due to surface tension effects of the hydrophobic fiber.

The fibers may have a internal diameter from about 0.001 centimeters (cm) to about 5 centimeters (cm), with a preferred range of 0.005 centimeters (cm) to about 1 centimeter (cm) and most desirably from about 0.01 centimeters (cm) to 0.1 centimeters (cm) in the case of polypropylene fibers.

In applications where a larger internal diameter is required, for example, where a smaller water body has been contaminated with oil, the diameter of the fibre may approximate that of conventional hose.

With respect to the individual fibers, it is preferred that the fibers comprise a hydrophobic material illustrated examples of which may include polyolefins such as polyethylene, poly- propylene, polybutene, polyisobutylene, polypentene, poly(4-methylisopentene) and their halogen-substituted derivatives having at least one fluorine atom: polycarbonate: polyphenylene oxide: polystyrene and a halogenated polystyrene having at least one fluorine atom: copolymers of ethylenically unsaturated hydrocarbons and/or halogen-substituted ethylenically unsaturated hydrocarbons having at least one fluorine atom, said ethyleni- cally unsaturated hydrocarbons and their halogen-substituted derivatives including ethylene, propylene, butene, isobutylene, pentene, hexene, monofluoroethylene, vinylidene fluoride, trifluoroethylene, tetrafluoroethylene, trifluorochloroethylene, hexafluoropropylene and the like: and blend polymers such as a combination of polyethylene with polypropylene, polyvinylidene fluoride, polytetrafluoroethylene or polystyrene; a combination of polypropylene with polyvinylidene fluoride or polytetrafluoro- ethylene; a combination of polyvinylidene fluoride with poly- sulfone, polyacrylonitrile, polyphenylene oxide or polytetrafluoroethylene; and the like. Preferred examples of materials employable, as a main component, polyethylene, a halogenated polyethylene having at least one fluorine atom, polypropylene, a halogenated polypropylene having at least one fluorine atom, polycarbonate or polyphenylene oxide; or copolymers of two or three kinds of monomers selected from ethylene, propylene and tetrafluoroethylene.

In the embodiments shown, the arrangement 10 includes a plurality of spaced apart parallel hydrophobic fibers, generally denoted by numeral 12. Although not illustrated in Figure 1, it will be understood that the fibers include the micropores as illustrated in Figure 3 and briefly discussed herein previously.

Each of the fibers 12 of which the floating mat arrangement is composed, according to this embodiment, includes an open end 16 and 18 as illustrated in Figure 2. In this embodiment, the ends 16 and 18 are in communication with closed receptacles or containers 20 and 22, respectively. The ends of the fibers are associated with a respective container 20 or 22 such that the ends of the fibers are within the container and not in contact with the fluid, water body, etc. to be treated.

Conduits 26 extend from each of the containers 20 and 22 for communication with a negative pressure pump 28, which serves as one possible form of introducing suction into the fibers 12. In view of the fact that the containers 20 and 22 are sealed, the net suction effect created by pump 28 is experienced by each of the fibers 12 of which the mat structure is made.

In operation, when the mat 10 is positioned within a water body for the purpose of removing a contaminant or several contaminants, the negative pressure pump 28 is actuated which induces a suction effect in the individual hollow fibers 12. As the fibers are in communication with the contaminant to be removed, the material drawn into the fibers 12 via the micropores 14 is eventually drawn into either or both containers 20 or 22. The density of the arrangement 10 will be selected to float in the contaminant to be collected in order that maximum possible surface contact of the individual fibers with the contaminant is achieved.

Once the material to be collected is collected in containers 20 and 22, the same may be stored therein or subsequently transported to another location. This aspect will be discussed hereinafter.

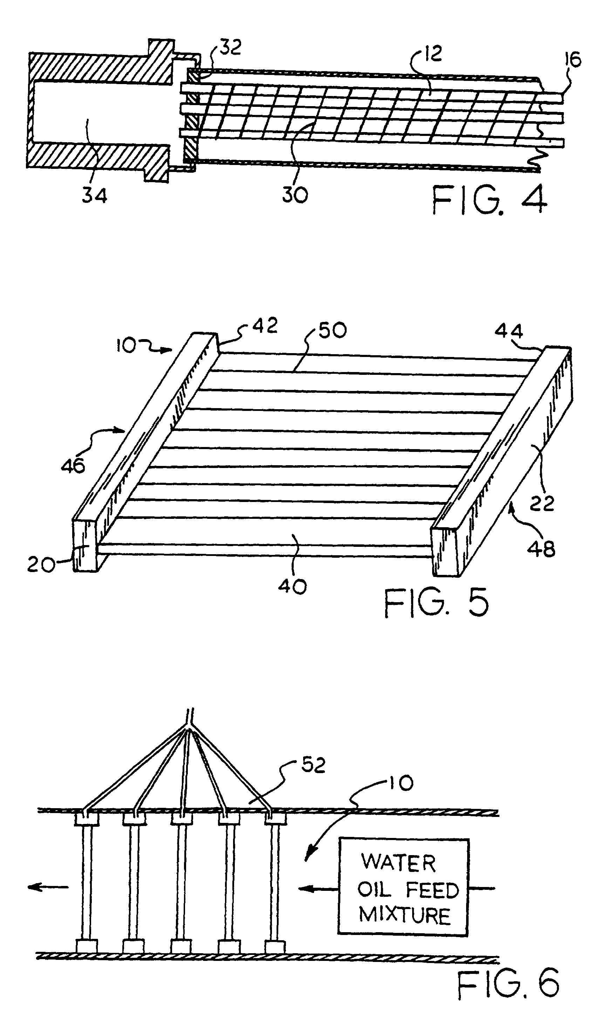

With reference to Figure 4, shown is an alternate embodiment of the present invention. In this embodiment, the mat 10 includes a plurality of spaced apart longitudinally arranged hollow fibers 12, each having a free end 16. The free ends 16 are closed and in this respect, the fibers employed in this embodiment are "single ended". This prevents the entry of water into the lumen which would otherwise occur if the fibers were open at end 16. In this arrangement, there is additionally included a plurality of laterally oriented members 30. Members 30 may be employed to impart additional structural integrity to the fiber arrangement or function as a coalescence enhancer, etc. Further still, the members 30 may comprise similar fibers as fibers 12. In each of the longitudinally oriented fibers 12, the opposed ends 18 are sealingly engaged by seal 32, which seal is connected to a source of negative pressure indicated by numeral 34.

As a further possible arrangement, it will be understood that the hollow fibers may be simply looped back to the seal 32, thus avoiding the need to provide a closed end on the ends 16 of the fibers 12.

Referring now to Figure 5, shown is a further embodiment of the present invention. In the embodiment shown, the mat 10 is composed of a plurality of bundles of fibers, the bundles being generally denoted by numeral 40. Similar to previous embodiments, the individual bundles, which bundles are composed of a plurality of individual fibers 12, include opposed ends 42,44 which are sealingly engaged with collection chambers 46,48 with a sealing compound, gasket or other such sealing arrangement generally denoted by numeral 50.

As set forth herein previously, the collection chambers 46,48 may be connected to a source of negative pressure in order to draw the contaminant into the micropores 14 and subsequently through lumen 13 of the fibers 12.

Figure 6 illustrates a plurality of the units as illustrated in Figures 4 or 5 positioned in a spaced apart sequential arrangement. In the embodiment shown, all of the individual units include a common connection to suction means, the suction means being generally denoted by numeral 52. The common connection 52 may occupy either or both sides of the arrangement, depending on the arrangement employed.

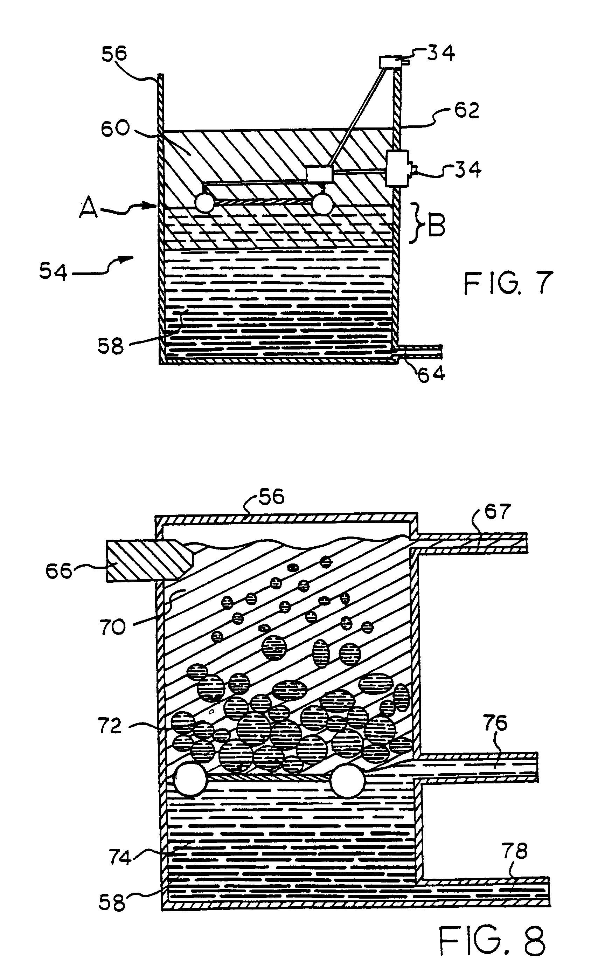

Turning now to Figure 7, there is schematically illustrated an example of an oil and water mixture phase separation unit, generally denoted by numeral 54. In the embodiment, numeral 56 represents a holding vessel into which may be pumped a mixture of water and a contaminant to be separated. The mixture may be introduced into the vessel 56 at A.

In the illustration, numeral 58 represents the water, while numeral 60 represents a contaminant or contaminants floating on the surface of the water 58. This arrangement may be found useful for immiscible contaminants which are dispersed droplets in the mixture and which require settling time in order for distinct phases to develop as illustrated. The embodiment is particularly useful for a situation where the droplet size is fairly small as compared to that which would be encountered in a gravity separation arrangement. In the example, the mat 10, as illustrated in Figure 2, may be employed within the vessel 56. As is clearly illustrated, the mat assembly is submerged and accordingly floating within the contaminant 60 or in the mixed phase region indicated by arrow B in the Figure. The pump 34 may be positioned directly on the mat as set forth herein previously with respect to Figure 2 or, in the alternative, may be positioned at a suitable location on vessel 56 and in communication with mat 10 via a suitable conduit indicated by numeral 62. As is evident from this embodiment, the pump 34 may be positioned at a suitable location which permits easy transportation of the collected material from within the collection areas 20,22 of mat 10 to a second location. The contaminant-free water may be removed from vessel 56 by outlet 64 and subsequently reintroduced into the water body from which it came or reintroduced into vessel 56 for further treatments or, alternatively, may be passed onto further purification equipment (not shown).

Turning to Figure 8, shown as yet a further embodiment of the present invention, shown in schematic form. In this embodiment, the arrangement may include a nozzle 66 extending inwardly and in communication with vessel 56. Vessel 56 further includes an inlet 67 which provides for extractant organic recycle, make-up, or level control. Also, inlet 67 permits access to the vessel 56 such that the composition of layer 70 may be selectively altered. The nozzle is useful for introducing a contaminant/water/metal composition into vessel 56 for separation. Having a feed containing the above-mentioned components, the result is generally that the materials stratify into layers 70,72 and 74. Layer 70 generally contains the organic phase, layer 72 contains a mixture of phases, water coalescents, etc. and layer 74 essentially comprises water. This is an example of layer separation where the organics, extractants, etc. are less dense that water. It will be readily appreciated by those skilled in the art that where the organics, contaminants, etc. have a greater density of water, that the order of the stratification will vary in accordance with the difference in density.

An outlet 76 on vessel 56 directly adjacent the mat 10 provides the extraction of the organic layer together with chelated metal compounds and/or free metals and chelant. Outlet 78 provides for the discharge of pure water devoid of the metal chelant, coordinated compounds or organics.

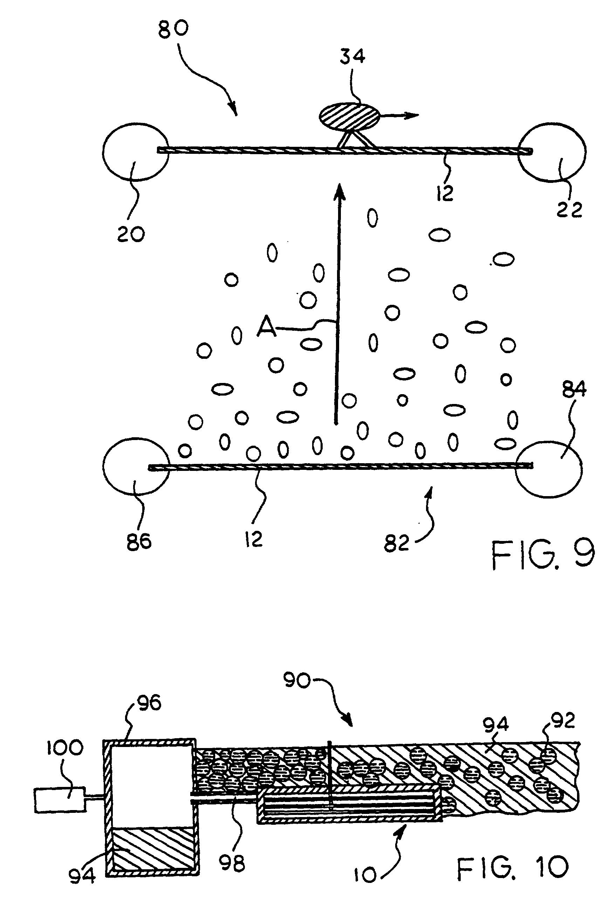

Referring now to Figure 9, shown as a further embodiment of a solvent extraction system contemplated by the present invention. The arrangement, generally denoted by numeral 80, is useful for solvent extraction of a soluble species including, for example, organics and metal inorganics. In the arrangement shown, the system includes a first mat arrangement 82 composed of the fibers as set forth herein previously. The fibers 12 communicate at their terminal ends with a first extractant reservoir 84, adapted to carry a suitable extractant, which may be either forced through the fibers or diffuse naturally. Where the extractant is to be forced through the fibers 12, a suitable positive pressure pump or other means for forcing the fluid through the fibers will be employed (not shown in Figure 9). The second reservoir 86 may be employed to recover unused extractant.

As the dispersed extractant flows through the body to be treated as indicated by arrow A in Figure 9, the extract may be recovered by the uppermost mat arrangement and collected in reservoirs 20 and 22 and subsequently pumped to a further collection location by pump 34.

In an alternate embodiment, the mat arrangement 82 may be substituted with any suitable means for dispersing an extractant, etc. into the body of material to be treated. Suitable arrangements will be readily apparent to those skilled in the art. Examples include simple perforated tubes or nozzle arrangements. Further still, there may be employed an external source of the extractant, etc. which is delivered to the mat arrangement 82.

By providing an outlet 76 and further in view of the fact that the mat 10 composed of the fibers permits removal of organic contaminants as well as various metals, the invention clearly has utility in the mining art since the arrangement can provide for recovered metal values which would otherwise be lost or irrecoverable.

It will be readily appreciated by those skilled in the art that the present invention is clearly applicable to removing soluble contaminants from a water body containing contaminants dissolved therein. It is clearly within the purview of the present invention to apply suitable treatments, appreciated by those skilled in the art, for the purpose of precipitating an aqueous phase from another phase. In this manner, once the phases are separated, the fiber mat or bundle arrangement or fiber array according to the present invention may be employed for the purpose of separating one phase from the other.

Where the contaminant comprises a petroleum or any other hydrocarbon floating on the surface of a water body from, for example, an oil tanker spill, one or several of the mats may be employed for recovering the oil from the surface and thus purifying the water. Depending on the size of the spill, an arrangement such as that indicated in Figure 6 may be desirable for cleaning up the spill. Where temperature increases the viscosity of the oil or the contaminant is of a highly viscous nature, the viscous contaminant may be diluted with a suitable diluent, e.g. a liquid hydrocarbon or any other suitable viscosity modifier. Further, the viscous contaminant may be heated to reduce its viscosity, if this practical. In this manner, the herein described units containing the microporous hollow fibers can readily function in a variety of environments.

Turning now to Figure 10, shown is a further embodiment of the present invention in which an array of the fibers 12 are used in conjunction with a containment boom conventionally employed in oil clean-up. The overall arrangement is globally denoted by numeral 90. In the example, a body of water 92 is contaminated with oil 94 floating thereon. The arrangement 10, which may comprise any of the previously mentioned embodiments, such as a bundled arrangement, mat arrangement, etc. is positioned in the oil 94 for recovery of the same. Recovered oil is collected in a boom 96, a section of which is illustrated in the schematic drawing. Communication between the mat 10 and containment boom 94 is achieved via a conduit 98. Numeral 100 represents a source of suction connected to the containment boom and accordingly to mat 10 via conduit 98. This is an optional element and would not be necessary if the arrangement 10 included a source of suction.

Finally, with respect to the choice of material of which the fibers and/or bundles may be composed, it will be appreciated by those skilled in the art that the fiber composition will depend upon the type of contaminant to be collected. In this manner, the fiber material will be selected such that the contaminant does not deleteriously alter the properties of the fiber with respect to lumen size, internal diameter, external diameter, pore size or surface characteristics such as hydrophobicity of the fiber and/or pore.

## Claims

1. An arrangement of fibers (12) for recovering an immiscible contaminant (60) from a liquid (54) containing said contaminant (60) to be recovered,
wherein said arrangement of fibers (12) comprises:
a plurality of hollow hydrophobic fibers (12) having pores (14) therein for passage of said contaminant (60) into the lumen (13) of said hollow hydrophobic fibers (12); said fibers having ends (16, 18) connected at one end to suction means (20, 22) for passing said contaminant (60) through said pores (14) and into and through said hollow hydrophobic fibers (12).

2. The arrangement as set forth in claim 1, **characterized in that** said pores are micropores (14).

3. The arrangement as set forth in claim 1, **characterized in that** said fibers (12) are arranged in intersecting relation.

4. The arrangement as set forth in claim 3, **characterized in that** said intersecting fibers (12) are arranged to form a mat (10).

5. The arrangement as set forth in claim 1, **characterized in that** said fibers (12) are arranged in a divergent pattern.

6. The arrangement as set forth in claim 1, **characterized in that** said fibers (12) are arranged in a parallel relationship to one another.

7. The arrangement as set forth in claim 4, **characterized in that** said intersection fibers (12) are in orthogonal relation.

8. The arrangement as set forth in claim 1, **characterized in that** said plurality of hollow fibers (12) are bundled to form individual modules (40).

9. The arrangement as set forth in claim 1, **characterized in that** said fibers (12) have an internal diameter from about 0.001 centimeters (cm) to about 5 centimeters (cm).

10. The arrangement as set forth in claim 9, **characterized in that** said fibers (12) have an internal diameter from about 0.005 centimeters (cm) to about 1 centimeter (cm).

11. The arrangement as set forth in claim 10, **characterized in that** said fibers (12) have an internal diameter from about 0.01 centimeters (cm) to about 0.2 centimeters (cm).

12. The arrangement as set forth in claim 1, **characterized by** storage means (96) for storing collected contaminant (94).

13. The arrangement as set forth in claim 12, **characterized by** an oil recovery system for recovering an oil contaminant (94) floating on a water body (92).

14. The arrangement as set forth in claim 12, **characterized in that** the arrangement is a self-contained system, said system further including floatation means for providing buoyancy to said suction means (100) and said storage means (96).

15. The arrangement as set forth in claim 13, **characterized by** discharge means (78) for discharging a liquid stream substantially free of said contaminant.

16. The arrangement as set forth in claim 14, **characterized by** further including drive means for driving said self-contained system.

17. The arrangement as set forth in claim 12, **characterized in that** said system is a remotely controllable system.

18. A method of purifying water contaminated with an immiscible contaminant, wherein said method comprises the steps of providing an arrangement of hollow hydrophobic fibers, said fibers including pores therein and ends thereof, wherein one end is connected to suction means; contacting the exterior of said fibers with said immiscible contaminant; collecting said contaminant under negative pressure through said pores and into and through said fibers; and separating said contaminant from said water.

19. A method of recovering oil on a water body, wherein said method comprises:
providing an arrangement of hollow hydrophobic fibers, said fibers including pores therein and
ends thereof, wherein one end is connected to suction means;
positioning said fibers within said oil;
passing said oil through said pores and into and through said fibers under negative pressure; and recovering said oil.

20. The method as set forth in claim 19, **characterized in that** said pores of said fibers are substantially surrounded by said oil.

21. A method of recovering an immiscible organic contaminant from a liquid containing said contaminant to be recovered, wherein said method comprises the steps of:
providing an arrangement of hollow hydrophobic fibers having pores therein;
contacting the exterior of said fibers with said liquid containing said contaminant;
pressurably forcing under negative pressure said contaminant through said pores and into and through said fibers; and collecting said contaminant from said liquid.

## Patentansprüche

1. Anordnung aus Fasern (12) für die Wiedergewinnung einer unvermischbaren Verunreinigung (60) aus einer Flüssigkeit (54), welche die wieder zu gewinnende Verunreinigung (60) enthält, worin die Anordnung von Fasern (12) aufweist:
eine Vielzahl von hohlen hydrophoben Fasern (12) mit Poren (14) in diesen für den Durchgang der Verunreinigung (60) in den Hohlraum (13) der hohlen hydrophoben Fasern (12); welche Fasern Enden (16,18) haben, die an einem Ende mit Saugmitteln (20,22) verbunden sind für den Durchgang der Verunreinigung (60) durch die Poren (14) und in und durch die hohlen hydrophoben Fasern (12).

2. Anordnung nach Anspruch 1, **dadurch gekennzeichnet, daß** die Poren Mikroporen (14) sind.

3. Anordnung nach Anspruch 1, **dadurch gekennzeichnet, daß** die Fasern (12) in einer sich schneidenden Beziehung angeordnet sind.

4. Anordnung nach Anspruch 3, **dadurch gekennzeichnet, daß** die einander schneidenden Fasern (12) zur Bildung einer Matte (10) angeordnet sind.

5. Anordnung nach Anspruch 1, **dadurch gekennzeichnet, daß** die Fasern (12) in einem divergierenden Muster angeordnet sind.

6. Anordnung nach Anspruch 1, **dadurch gekennzeichnet, daß** die Fasern (12) in einer zueinander parallelen Beziehung angeordnet sind.

7. Anordnung nach Anspruch 4, **dadurch gekennzeichnet, daß** die sich schneidenden Fasern (12) in einer orthogonalen Beziehung sind.

8. Anordnung nach Anspruch 1, **dadurch gekennzeichnet, daß** die Vielzahl von hohlen Fasern (12) gebündelt sind, um individuelle Module (40) zu bilden.

9. Anordnung nach Anspruch 1, **dadurch gekennzeichnet, daß** die Fasern (12) einen inneren Durchmesser von etwa 0,001 Zentimetern (cm) bis etwa 5 Zentimetern (cm) haben.

10. Anordnung nach Anspruch 9, **dadurch gekennzeichnet, daß** die Fasern (12) einen inneren Durchmesser von etwa 0,005 Zentimetern (cm) bis etwa 1 Zentimeter (cm) haben.

11. Anordnung nach Anspruch 10, **dadurch gekennzeichnet, daß** die Fasern (12) einen inneren Durchmesser von etwa 0,01 Zentimetern (cm) bis etwa 0,2 Zentimetern (cm) haben.

12. Anordnung nach Anspruch 1, **gekennzeichnet durch** Speichermittel (96) zum Speichern der gesammelten Verunreinigung (94).

13. Anordnung nach Anspruch 12, **gekennzeichnet durch** ein Ölwiedergewinnungssystem zum Wiedergewinnen einer Ölverunreinigung (94), die auf einem Wasserkörper (92) schwimmt.

14. Anordnung nach Anspruch 12, **dadurch gekennzeichnet, daß** die Anordnung ein unabhängiges System ist, welches System weiterhin eine Schwimmvorrichtung enthält, um den Saugmitteln (100) und den Speichermitteln (96) Schwimmfähigkeit zu verleihen.

15. Anordnung nach Anspruch 13, **gekennzeichnet durch** Ausgabemittel (78) für die Ausgabe eines Flüssigkeitsstroms, der im wesentlichen frei von der Verunreinigung ist.

16. Anordnung nach Anspruch 14, weiterhin **gekennzeichnet durch** Antriebsmittel zum Antrieb des unabhängigen Systems.

17. Anordnung nach Anspruch 12, **dadurch gekennzeichnet, daß** das System ein fernsteuerbares System ist.

18. Verfahren zum Reinigen von Wasser, das mit einer unvermischbaren Verunreinigung verunreinigt ist, worin das Verfahren die Schritte aufweist:
Vorsehen einer Anordnung von hohlen hydrophoben Fasern, welche Poren und Enden aufweisen, wobei ein Ende mit Saugmitteln verbunden ist;
in Berührungbringen des Äußeren der Fasern mit der unvermischbaren Verunreinigung;
Sammeln der Verunreinigung unter negativem Druck durch die Poren und in und durch die Fasern; und
Trennen der Verunreinigung von dem Wasser.

19. Verfahren zum Wiedergewinnen von Öl auf einem Wasserkörper, worin das Verfahren aufweist:
Vorsehen einer Anordnung von hohlen hydrophoben Fasern, welche Fasern Poren und Enden aufweisen, wobei ein Ende mit Saugmitteln verbunden ist;
Positionieren der Fasern innerhalb des Öls; Hindurchführen des Öls durch die Poren und in und durch die Fasern unter negativem Druck; und
Wiedergewinnen des Öls.

20. Verfahren nach Anspruch 19, **dadurch gekennzeichnet, daß** die Poren der Fasern im wesentlichen von dem Öl umgeben sind.

21. Verfahren zum Wiedergewinnen einer unvermischbaren organischen Verunreinigung aus einer Flüssigkeit, welche die wieder zu gewinnende Verunreinigung enthält, worin das Verfahren die Schritte aufweist:
Vorsehen einer Anordnung von hohlen hydrophoben Fasern mit Poren;
Inberührungbringen des Äußeren der Fasern mit der die Verunreinigung enthaltenden Flüssigkeit;
Drücken der Verunreinigung durch die Poren und in und durch die Fasern unter negativem Druck; und Sammeln der Verunreinigung aus der Flüssigkeit.

## Revendications

1. Ensemble de fibres (12) permettant de récupérer un contaminant non miscible (60) à partir d'un liquide (54) contenant ledit contaminant (60) à récupérer,
dans lequel ledit ensemble de fibres (12) comprend :
une pluralité de fibres creuses hydrophobes (12) comportant des pores (14) pour le passage du dit contaminant (60) dans le lumen (13) des dites fibres creuses (12) ; lesdites fibres présentant des extrémités (16, 18) raccordées au niveau d'une extrémité à un moyen d'aspiration (20, 22) pour faire passer ledit contaminant (60) par lesdits pores (14) dans et à travers lesdites fibres creuses hydrophobes (12).

2. Ensemble selon la revendication 1, **caractérisé en ce que** lesdits pores sont des micropores (14).

3. Ensemble selon la revendication 1, **caractérisé en ce que** lesdites fibres (12) sont disposées selon une relation sécante.

4. Ensemble selon la revendication 3, **caractérisé en ce que** lesdites fibres sécantes (12) sont disposées de façon à former un matelas (10).

5. Ensemble selon la revendication 1, **caractérisé en ce que** lesdites fibres (12) sont disposées selon un modèle divergent.

6. Ensemble selon la revendication 1, **caractérisé en ce que** lesdites fibres (12) sont disposées les unes par rapport aux autres selon une relation parallèle.

7. Ensemble selon la revendication 4, **caractérisé en ce que** lesdites fibres sécantes (12) sont placées selon une relation orthogonale.

8. Ensemble selon la revendication 1, **caractérisé en ce que** ladite pluralité de fibres creuses (12) est groupée pour former des modules (40) individuels.

9. Ensemble selon la revendication 1, **caractérisé en ce que** lesdites fibres (12) possèdent un diamètre intérieur compris entre environ 0,001 centimètre (cm) et environ 5 centimètres (cm).

10. Ensemble selon la revendication 9, **caractérisé en ce que** lesdites fibres (12) possèdent un diamètre intérieur compris entre environ 0,005 centimètre (cm) et environ 1 centimètre (cm).

11. Ensemble selon la revendication 10, **caractérisé en ce que** lesdites fibres (12) possèdent un diamètre intérieur compris entre environ 0,01 centimètre (cm) et environ 0,2 centimètre (cm).

12. Ensemble selon la revendication 1, **caractérisé par** des moyens de stockage (96) permettant de stocker le contaminant (94) recueilli.

13. Ensemble selon la revendication 12, **caractérisé par** un ensemble de récupération d'huile permettant de récupérer un contaminant huileux (94) flottant sur un corps aqueux (92).

14. Ensemble selon la revendication 12, **caractérisé en ce que** le dispositif est un ensemble autonome, ledit ensemble contenant en outre un moyen de flottaison pour conférer une flottabilité au dit moyen d'aspiration (100) et au dit moyen de stockage (96).

15. Ensemble selon la revendication 13, **caractérisé par** un moyen de décharge (78) permettant de décharger un écoulement liquide substantiellement exempt du dit contaminant.

16. Ensemble selon la revendication 14, **caractérisé en ce qu'**il comprend en outre un moyen d'entraînement permettant d'entraîner le dit ensemble autonome.

17. Ensemble selon la revendication 12, **caractérisé en ce que** ledit ensemble est un ensemble pouvant être commandé à distance.

18. Procédé de purification d'eau contaminée avec un contaminant non miscible, dans lequel ledit procédé comprend les étapes consistant à : fournir un ensemble de fibres creuses hydrophobes. lesdites fibres comportant des pores et des extrémités, où une extrémité est raccordée à un moyen d'aspiration ; mettre en contact l'extérieur des dites fibres creuses avec ledit contaminant non miscible ; recueillir ledit contaminant sous pression négative par lesdits pores, dans et à travers lesdites fibres ; et séparer ledit contaminant de ladite eau.

19. Procédé de récupération d'huile sur un corps aqueux, dans lequel ledit procédé comprend les étapes consistant à : fournir un ensemble de fibres creuses hydrophobes, lesdites fibres comprenant des pores et des extrémités, où une extrémité est raccordée à un moyen d'aspiration ; placer lesdites fibres dans ladite huile ; passer ladite huile par lesdits pores dans et à travers lesdites fibres sous pression négative ; et récupérer ladite huile.

20. Procédé selon la revendication 19, **caractérisé en ce que** lesdits pores des dites fibres sont substantiellement entourés par ladite huile.

21. Procédé de récupération d'un contaminant organique non miscible à partir d'un liquide contenant ledit contaminant à récupérer, dans lequel ledit procédé comprend les étapes consistant à : fournir un ensemble de fibres creuses hydrophobes présentant des pores ; mettre en contact l'extérieur desdites fibres creuses avec ledit liquide contenant ledit contaminant ; forcer par pression sous pression négative ledit contaminant à travers lesdits pores dans et à travers lesdites fibres ; et recueillir ledit contaminant à partir du dit liquide.
